# EUROPÄISCHE PATENTSCHRIFT

(11) **EP 2 467 328 B1**
(45) Veröffentlichungstag und Bekanntmachung des Hinweises auf die Patenterteilung: **21.09.2016**
(21) Anmeldenummer: 10742438.4
(22) Anmeldetag: 07.08.2010
(51) Int. Cl.: C01B 31/02, B01J 37/08, B01J 23/889, B01J 21/18, B01J 23/00, B01J 23/85, B82Y 30/00, B82Y 40/00, B01J 20/20, B01J 37/03

(54) **KOHLENSTOFFNANORÖHRCHEN-AGGLOMERAT**
CARBON NANOTUBE AGGLOMERATE
AGGLOMÉRAT DE NANOTUBES DE CARBONE

(30) Priorität: 21.08.2009 DE 102009038464
(43) Veröffentlichungstag der Anmeldung: 27.06.2012
(73) Patentinhaber: Covestro Deutschland AG, 51373 Leverkusen (DE)
(72) Erfinder: HOCKE, Heiko, 51375 Leverkusen (DE); WEBER, Ralph, 42799 Leichlingen (DE); BRAMER-WEGER, Elmar, 53347d Alfter (DE)
(74) Vertreter: Levpat
(86) Internationale Anmeldenummer: PCT/EP2010/004845
(87) Internationale Veröffentlichungsnummer: WO 2011/020568

(56) Entgegenhaltungen:
- EP-A2- 1 209 123
- DE-A1-102004 054 959
- DE-A1-102007 044 031
- DE-A1-102007 046 160
- LIU Z ET AL: "Densification of Carbon Nanotube Bundles for Interconnect Application", INTERNATIONAL INTERCONNECT TECHNOLOGY CONFERENCE, IEEE 2007, IEEE, PI, 1 June 2007 (2007-06-01), pages 201-203, XP031111813, ISBN: 978-1-4244-1069-9

## Beschreibung

Bei der Erfindung handelt es sich um ein Verfahren zur Herstellung von Kohlenstoffnanoröhrchen in agglomerierter Form und hieraus erhältliche neue Kohlenstoffnanoröhrchen-Agglomerate.

Unter Kohlenstoffnanoröhrchen werden nach dem Stand der Technik hauptsächlich zylinderförmige Kohlenstoffröhren mit einem Durchmesser von 3 bis 100 nm verstanden und einer Länge, die ein Vielfaches des Durchmessers beträgt. Diese Röhrchen bestehen aus einer oder mehreren Lagen geordneter Kohlenstoffatome und weisen einen in der Morphologie unterschiedlichen Kern auf. Diese Kohlenstoffnanoröhrchen werden beispielsweise auch als "carbon fibrils" oder "hollow carbon fibres" bezeichnet.

In der Fachliteratur sind Kohlenstoffnanoröhrchen seit langem bekannt. Obwohl Iijima (Publikation: S. Iijima, Nature 354, 56-58, 1991) allgemein als Entdecker der Kohlenstoffnanoröhrchen bezeichnet wird, sind diese Materialien, insbesondere faserförmige Graphitmaterialien mit mehreren Graphitschichten, schon seit den 70er bzw. frühen 80er Jahren bekannt. Tates und Baker (GB 1469930A1, 1977 und EP 56004 A2) beschrieben erstmals die Abscheidung von sehr feinem faserförmigen Kohlenstoff aus der katalytischen Zersetzung von Kohlenwasserstoffen. Allerdings werden die auf Basis kurzkettiger Kohlenwasserstoffe hergestellten Kohlenstofffilamente nicht näher in Bezug auf ihren Durchmesser charakterisiert.

Übliche Strukturen dieser Kohlenstoffnanoröhrchen sind solche vom Zylinder Typ. Bei den zylindrischen Strukturen unterscheidet man zwischen den einwandigen Monokohlenstoffnanoröhrchen (Single Wall Carbon Nano Tubes) und den mehrwandigen zylindrischen Kohlenstoffnanoröhrchen (Multi Wall Carbon Nano Tubes). Gängige Verfahren zu ihrer Herstellung sind z.B. Lichtbogenverfahren (arc discharge), Laser Ablation (laser ablation), Chemische Abscheidung aus der Dampfphase (CVD process) und Katalytisch Chemische Abscheidung aus der Dampfphase (CCVD process).

Aus Iijima, Nature 354, 1991, 56-8 ist die Bildung von Kohlenstoffröhrchen im Lichtbogenverfahren bekannt, die aus zwei oder mehr Graphenlagen bestehen und zu einem nahtlos geschlossen Zylinder aufgerollt und ineinander geschachtelt sind. Abhängig vom Aufrollvektor sind chirale und achirale Anordnungen der Kohlenstoffatome im Verhältnis zu der Längsachse der Kohlenstofffaser möglich.

Außerdem sind Kohlenstoffnanoröhrchen beschrieben, die eine sogenannte Fischgräten - Morphologie (J.W. Geus, EP Applikation 198,558) und wieder andere, die eine Bambus-artige Struktur (Z. Ren, US 6,911,260 B2) aufweisen.

Strukturen von Kohlenstoffröhrchen, bei denen eine einzelne zusammenhängende Graphenlage (sogenannter scroll type) oder unterbrochene Graphenlage (sogenannter onion type) die Basis für den Aufbau der Nanoröhre ist, wurden erstmals von Bacon et al., J. Appl. Phys. 34, 1960, 283-90, beschrieben. Die Struktur wird als Scroll Type bezeichnet. Später wurden entsprechende Strukturen auch von Zhou et al., Science, 263, 1994, 1744-47 und von Lavin et al., Carbon 40, 2002, 1123-30 gefunden.

Ein weiterer Typ von Scroll Strukturen wurde vor kurzem in der Patentanmeldung WO2009036877 A2 beschrieben. Diese CNT-Strukturen bestehen aus mehreren Graphenlagen, die zu einem Stapel zusammengefasst und aufgerollt vorliegen (Multiscroll Type). Die einzelnen Graphen- bzw. Graphitschichten in diesen Kohlenstoffnanoröhrchen im Querschnitt gesehen verlaufen durchgehend vom Zentrum der CNT bis zum äußeren Rand ohne Unterbrechung.

Alle oben beschriebenen Strukturen von Kohlenstoffnanoröhrchen sind im Sinne der Erfindung im weiteren einfach als Kohlenstoffnanoröhrchen, Carbon Nanotubes, Fibrillen bzw. CNT oder MWCNT zusammengefasst.

Die heute bekannten Methoden zur Herstellung von Carbon Nanotubes umfassen Lichtbogen-, Laserablations- und katalytische Verfahren. Bei vielen dieser Verfahren werden Ruß, amorpher Kohlenstoff und Fasern mit hohem Durchmesser als Nebenprodukte gebildet. Bei den katalytischen Verfahren kann zwischen der Abscheidung an z.B. geträgerten Katalysatorpartikeln und der Abscheidung an in-situ gebildeten Metallzentren mit Durchmessern im Nanometerbereich (sogenannte Flow-Verfahren) unterschieden werden. Bei der Herstellung über die katalytische Abscheidung von Kohlenstoff aus bei Reaktionsbedingungen gasförmigen Kohlenwasserstoffen (im folgenden CCVD; Catalytic Carbon Vapour Deposition) werden als mögliche Kohlenstoffspender Acetylen, Methan, Ethan, Ethylen, Butan, Buten, Butadien, Benzol, Toluol, Xylol und weitere, Kohlenstoff enthaltende Edukte genannt. Bevorzugt werden daher CNTs erhältlich aus katalytischen Verfahren eingesetzt.

Die Katalysatoren beinhalten in der Regel Metalle, Metalloxide oder zersetzbare bzw. reduzierbare Metallkomponenten. Beispielsweise sind im Stand der Technik als Metalle für den Katalysator Fe, Mo, Ni, V, Mn, Sn, Co, Cu und weitere Nebengruppenelemente genannt. Die einzelnen Metalle haben meist zwar eine Tendenz, die Bildung von Kohlenstoffnanoröhrchen zu unterstützen, allerdings werden laut Stand der Technik hohe Ausbeuten und geringe Anteile amorpher Kohlenstoffe vorteilhaft mit solchen Metallkatalysatoren erreicht, die auf einer Kombination der oben genannten Metalle basieren. CNTs erhältlich unter Verwendung von Mischkatalysatoren sind folglich bevorzugt einzusetzen.

Besonders vorteilhafte Katalysatorsysteme zur Herstellung von CNTs basieren auf Kombinationen von Metallen oder Metallverbindungen, die zwei oder mehr Elemente aus der Reihe Fe, Co, Mn, Mo und Ni enthalten.

Die Bildung von Kohlenstoffnanoröhrchen und die Eigenschaften der gebildeten Röhrchen hängen erfahrungsgemäß in komplexer Weise von der als Katalysator verwendeten Metallkomponente oder einer Kombination mehrerer Metallkomponenten, dem gegebenenfalls verwendeten Katalysatorträgermaterial und der Wechselwirkung zwischen Katalysator und Träger, dem Eduktgas und -partialdruck, einer Beimischung von Wasserstoff oder weiteren Gasen, der Reaktionstemperatur und der Verweilzeit bzw. dem verwendeten Reaktor ab.

Ein besonders bevorzugt einzusetzendes Verfahren zur Herstellung von Kohlenstoffnanoröhrchen ist aus der WO 2006/050903 A2 bekannt.

In den bis hier genannten unterschiedlichen Verfahren unter Einsatz verschiedener Katalysatorsysteme werden Kohlenstoffnanoröhrchen verschiedener Strukturen hergestellt, die aus dem Prozess überwiegend als Kohlenstoffnanoröhrchenpulver entnommen werden können.

Für die Erfindung weiter bevorzugt geeignete Kohlenstoffnanoröhrchen werden nach Verfahren erhalten, die grundsätzlich in den nachstehenden Literaturstellen beschrieben sind:
Die Herstellung von Kohlenstoffnanoröhrchen mit Durchmessern kleiner 100 nm ist erstmals in EP 205 556 B1 beschrieben. Für die Herstellung werden hier leichte (d. h. kurz- und mittelkettige aliphatische oder ein- oder zweikernige aromatische) Kohlenwasserstoffe und ein auf Eisen basierender Katalysator eingesetzt, an dem Kohlenstoffträgerverbindungen bei einer Temperatur oberhalb von 800-900°C zersetzt werden. Eine detailierte Beschreibung der Agglomeratmorphologie der Kohlenstofnanoröhrchen wurde nicht gegeben.

Die WO86/03455A1, beschreibt die Herstellung von Kohlenstofffilamenten, die eine zylindrische Struktur mit einem konstanten Durchmesser von 3.5 bis 70 nm aufweisen, einem Aspektverhältnis (Verhältnis von Länge zu Durchmesser) von größer 100 und einer Kernregion. Diese Fibrillen bestehen aus vielen, durchgängigen Lagen geordneter Kohlenstoffatome, die konzentrisch um die zylindrische Achse der Fibrillen angeordnet sind. Diese zylinderartigen Carbon Nanotubes wurden nach einem CVD Prozess aus kohlenstoffhaltigen Verbindungen mittels eines metallhaltigen Partikels bei einer Temperatur zwischen 850°C und 1200 °C hergestellt. Der Katalysator für diese Reaktion wurde durch Imprägnierung verschiedener Aluminiumoxide mit Eisensalzen in wässriger Lösung erhalten. Die Aluminiumoxide wurden zum Teil vor der Beladung mit Eisensalzen bei Temperaturen bis zu 1100°C und nach Beladung bis 500°C unter oxidativen Bedingungen kalziniert. Auch eine reduktive Kalzinierung der mit Eisen beladenen Aluminiumoxidträger bis 1100°C wurde untersucht. Die hergestellten Fibrillen wurden mittels Mikroskopie untersucht, allerdings wurden keine Angaben zu Fibrilagglomeraten oder deren Morphologie gemacht. Moy und Mitarbeiter (US Patent 5,726,116, US 7,198,772 B2; Fa. Hyperion Catalysis International Inc.) berichten erstmals über unterschiedliche Fibrilagglomeratmorphologien, die sich in Abhängigkeit des gewählten Katalysatorträgers bilden. Moy unterscheidet dabei 3 Morphologien, die Vogelneststruktur (BN), die Kammgarn Struktur (CY) und die offene Netzstruktur (ON). Bei der Vogelneststruktur (BN) sind die Fibrillen zufällig verkäult in einer Form so angeordnet, dass ein Ball aus miteinander verschlungenen Fibrillen gebildet wird, der dem Aufbau eines Vogelnestes gleicht. Diese Struktur kann z. B. durch den Einsatz von Aluminiumoxid als Trägermaterial für Eisen/ Molybdän Katalysator erhalten werden.

Die Kammgarnstruktur (CY) besteht aus Bündeln von Carbon Nanotubes, die größtenteils dieselbe relative Orientierung zueinander haben. Die offenen Netzstruktur (ON) wird durch Fibrilagglomerate gebildet, bei denen die Fibrillen lose miteinander verwoben sind. Diese beiden Strukturen werden gebildet, wenn gamma-Aluminiumoxid, z.B ALCOA H705, oder Magnesiumoxid (Fa. Martin Marietta) als Trägermaterial bei aufgefällten oder imprägnierten Katalysatoren verwendet wird. Die Beschreibungen der Morphologien enthalten keine genaueren Angaben bezüglich Größe der Agglomerate, Definitionen der Ausrichtungen der CNT innerhalb der Agglomerate oder weitere physikalische oder geometrische Parameter zur Charakterisierung der Strukturen. Die Agglomerate gebildet aus CY- und ON- Strukturen sollen leichter dispergierbar sein als die der BN Struktur.

Eine andere Methode der Herstellung von CNT Katalysatoren ist die Ko-Fällung von Metallverbindungen, z.B. von Oxiden, aus einer Lösung. Bei dieser gleichzeitigen Ausfällung entstehen spherische Partikel gemischter Metalloxide. Im Gegensatz zu den vorher beschriebenen geträgerten Katalysatorsystemen, bei denen sich das Aktivmetall nur auf der Oberfläche einer (inerten) Trägersubstanz befindet, ist bei den ko-gefällten spherischen Mischoxiden das katalytische Aktivmetall überall homogen mit den anderen Metalloxiden innerhalb des Katalysatorpartikels verteilt. Die Beladung mit Aktivmetall und damit die Effizienz ist gesteigert. Die katalytisch nicht aktiven Metalloxide fungieren hierbei als Bindemittel und Abstandshalter. Im Idealfall wird dieser Katalysator während der Reaktion komplett aufgesprengt und alle aktiven Metallzentren werden für die Reaktion zugänglich. Der ursprüngliche Katalysatorpartikel wird dabei vollständig zerstört. Moy et al. (US 6,294,144; US 7,198,772) untersuchte systematisch kogefällte Katalysatoren auf Basis Eisen-, Molybdän- und Aluminiumoxid für die Synthese von Carbon Nanotubes und erhielt in allen Fällen CNT-Agglomerate mit Vogelneststruktur (BN).

In der Patentanmeldung WO 2009 043445 A2 wird ein ko-gefällter Katalysator auf Basis eines Mischoxides aus Kobalt-, Mangan-, Aluminium- und Magnesiumoxid beschrieben, der für die Herstellung von Kohlenstoffnanoröhrchen geeignet ist und sich durch eine sehr hohe Effizienz auszeichnet. Die so erhaltenen Kohlenstoffnanoröhrchenagglomerate zeichnen sich durch einen hohen Grad an Verknäulung ähnlich der CNT mit Vogelneststruktur aus, bei dem die einzelnen CNT unausgerichtet miteinander verwoben sind. Die Dispergierung dieser Agglomerate, z.B. in Polymeren oder niedrig-viskosen Systemen wie Lösungsmitteln, ist dadurch erschwert. Die für eine gute Dispergierung erforderlichen Kräfte führen neben der Auflösung der CNT-Agglomerate auch zur unerwünschten Schädigung der einzelnen CNT (z.B. Kürzung) und des Polymers (Verringerung des Molekulargewichtes).

Wünschenswert ist, einen Prozess zur Herstellung von CNT Agglomeraten zu haben, bei dem der Katalysator hohe Umsätze und CNT Ausbeuten liefert und das Produkt gleichzeitig einfach und mit geringen Energie- und Krafteintrag in Polymere (Thermoplasten) zu dispergieren ist, um eine Schädigung sowohl der einzelnen CNT als auch des Polymers bei der Agglomeratauflösung zu vermeiden.

Gegenstand der Erfindung ist ein Agglomerat aus Kohlenstoffnanoröhrchen, die einen Durchmesser von 3 bis 100 nm und ein Länge zu Durchmesser-Verhältnis von mindestens 5 aufweisen, dadurch gekennzeichnet, dass das Agglomerat Bündel von Kohlenstoffnanoröhrchen in Form von miteinander verschlungenen gebauschten Garnen aus Kohlenstoffnanoröhrchen aufweist, wobei die Kohlenstoffnanoröhrchen in dem gebauschten Garnbündel einen mittleren Abstand voneinander im Bereich von 20 bis 100 nm, bevorzugt 30 bis 80 nm, besonders bevorzugt 40 bis 60 nm haben.

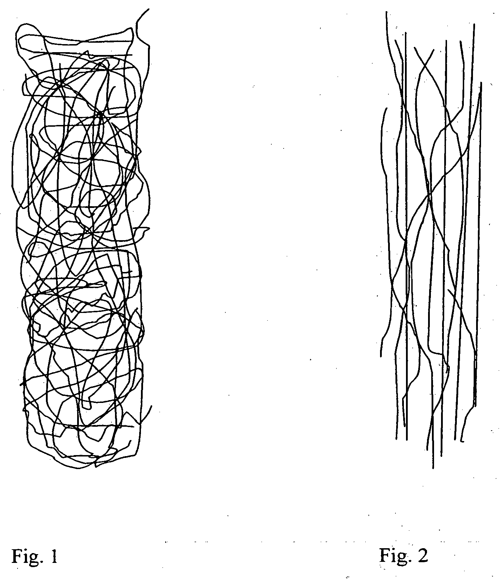

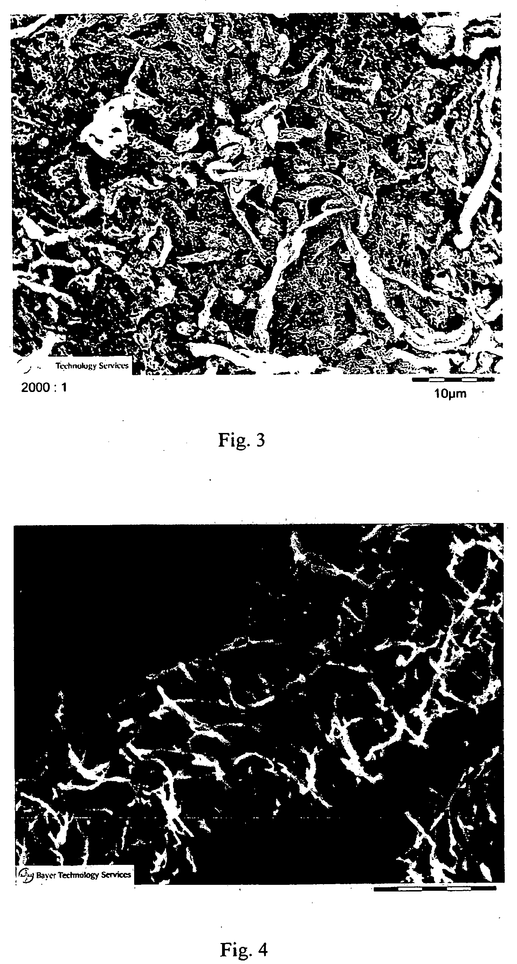

In einer bevorzugten Ausführungsform des neuen Agglomerats liegen die Kohlenstoffnanoröhrchen in dem gebauschten Garn aus CNT, die das Agglomerat bilden, insbesondere lose ineinander verschlungen vor. Die gebauschten Garne aus CNT im Agglomerat haben im wesentlichen einen Durchmesser von 0.1 µm bis 20 µm, bevorzugt von 0.14 µm bis 10 µm und besonders bevorzugt von 0.18 µm bis 3 µm. Der Durchmesser der bauschigen Garne im Agglomerat variiert insbesondere im vorgenannten Bereich über die Länge des Garnes betrachtet. Die CNT innerhalb der Garne sind im wesentlichen nicht gerade zueinander ausgerichtet, sondern weisen im Unterschied zu den beschriebenen CY- Strukturen (schematisch in Figur 2 wiedergegeben) eine im wesentlichen ungeordnete Lage zueinander auf. (schematisch in Figur 1 wiedergegeben).

Bevorzugt ist eine Form des neuen Agglomerats, bei dem mindestens 95 Gew.-% der Agglomeratteilchen einen Außendurchmesser im Bereich von 20 µm bis 6000 µm, bevorzugt 60 µm bis 4000 µm, besonders bevorzugt 100 µm bis 1500 µm haben.

Bevorzugt weist das Agglomerat eine Schüttdichte gemäß EN ISO 60 von 20 bis 250 kg/m³, bevorzugt 40 bis 200 kg/m³, besonders bevorzugt 50 bis 150 kg/m³ auf.

In einer bevorzugten Variante des neuen Agglomerats weist das Agglomerat außer den Kohlenstoffnanoröhrchenbündeln in Form von gebauschten Garnen zu einem Anteil von weniger als 30 %, bevorzugt höchstens 20 %, besonders bevorzugt höchstens 10 %, andere Strukturbündelformen von Kohlenstoffnanoröhrchen auf, insbesondere solche der Reihe Kohlenstoffnanoröhrchenbündel in Kammgarnstruktur, in Vogelneststruktur, in offener Netzstruktur oder in Form parallel zueinander ausgerichteter Fibrillenbündel.

Eine weitere bevorzugte Ausführung des Agglomerats ist dadurch gekennzeichnet, dass die Kohlenstoffnanoröhrchen einen Gehalt an Verunreinigungen, insbesondere von Metallen oder Metallverbindungen, insbesondere bevorzugt von Metalloxiden, von höchstens 7 Gew.-%, bevorzugt höchstens 5 Gew.-%, aufweisen.

Besonders bevorzugt sind die neuen Agglomerate so aufgebaut, dass die Kohlenstoffnanoröhrchen in Form von mehrwandigen Kohlenstoffnanoröhrchen vorliegen, insbesondere solchen, die ineinander verschachtelte Graphitröhren (Zylindertyp) aufweisen, oder auf aufgerollten, mehrlagigen Graphenschichten (Scrolltyp) basieren. Die letzt genannten MWCNT Typen sind beispielsweise in den Schriften: US 5 747 161, US 4 663 230 und WO2009 036 877 A2 im einzelnen beschrieben. Insbesondere bevorzugt basieren die neuen Agglomerate auf MWCNT vom Scrolltyp.

Zur Herstellung der vorgenannten neuen Agglomerate wurde auch ein neues Herstellungsverfahren entwickelt.
Ein Verfahren zur Herstellung von Agglomeraten aus Kohlenstoffnanoröhrchen besteht darin, dass in einem ersten Schritt aus Lösungen von Metallsalzen von Metallen der VIII. Nebengruppe des Periodensystems, insbesondere von Eisen, Kobalt oder Nickel, bevorzugt von Kobalt, mit Metallsalzen von Metallen der VI. oder VII. Nebengruppe des Periodensystems, insbesondere mit Metallen aus der Reihe Mangan, Molybdän, Chrom und Wolfram bevorzugt von Mangan durch Auffällung der Lösung auf einen Träger insbesondere zu Oxiden und/oder Hydroxiden oder gegebenenfalls deren Hydraten, oder Co-Fällung der Metallsalzlösungen insbesondere zu Oxiden und/oder Hydroxiden oder gegebenenfalls deren Hydraten, mit einer oder mehreren Metallverbindungen der Reihe Aluminium, Magnesium, Silizium, Zirkon, Titan, aus wässriger Lösung ein Katalysatorvorläufer gebildet wird,
der Katalysatorvorläufer von Lösungsmitteln befreit wird,
der Katalysatorvorläufer anschließend thermisch nachbehandelt wird,
wobei der Katalysatorvorläufer bei der thermischen Nachbehandlung einer Hochtemperaturkalzinierung in Gegenwart von nicht reduzierenden Gasen, gegebenenfalls unter vermindertem Druck insbesondere in Gegenwart von Luft, bei einer Temperatur von mindestens 800 °C unterzogen wird,
der hierbei erhaltene Katalysator gegebenenfalls anschließend einer reduktiven Nachbehandlung unterzogen wird,
und an dem erhaltenen Katalysator bei einer Temperatur von mindestens 500 °C in Anwesenheit von Wasserstoff und Kohlenstoff enthaltenden Vorläuferverbindungen, insbesondere Kohlenwasserstoffen, die katalytische Zersetzung der Kohlenstoffvorläuferverbindungen, insbesondere der Kohlenwasserstoffe, insbesondere bevorzugt einer Verbindung aus der Reihe: Acetylen, Methan, Ethan, Ethylen, Butan, Buten, Butadien, Benzol, Alkylbenzol, insbesondere Toluol oder Xylol, besonders bevorzugt von Ethylen durchgeführt wird und die dabei erhaltenen CNT-Agglomerate isoliert werden.

Bevorzugt wird der Katalysatorvorläufer mittels Co-Fällung von Metallsalzlösungen der vorgenannten Metalle, insbesondere von Nitraten, Chloriden oder Carboxylaten, insbesondere Acetaten, von mindestens zwei Metallen aus der Reihe Kobalt, Mangan, Molybdän, Aluminium und Magnesium gebildet.

Vorzugsweise erfolgt die Co-Fällung der Metallsalze mit Hilfe von Alkali- Erdalkalilaugen oder auf Ammoniak basierenden Laugen aus einer sauren Lösung der Metallsalze.

In einer bevorzugten Ausführung des Verfahrens erfolgt die Hochtemperaturkalzinierung bei einer Temperatur von 800 bis 1100 °C, bevorzugt 850 bis 1100 °C, besonders bevorzugt 900 bis 1050 °C.

Eine besonders bevorzugte Variante des neuen Verfahrens ist dadurch gekennzeichnet, dass die Umsetzung des Kohlenwasserstoffs in einer Wirbelschicht unter kontinuierlicher oder diskontinuierlicher Zugabe des Katalysators erfolgt gegebenenfalls unter Verwendung eines (z. B. inerten) Trägergases, z.B. Stickstoff oder Wasserstoff, und unter anschließender kontinuierlicher Austragung des Kohlenstoffnanoröhrchenagglomerats aus der Wirbelschicht.

Der einzusetzende Katalysatorprecursor wird in einer bevorzugten Ausführungsform durch

Cofällung der katalytisch aktiven Metallverbindungen Co und Mn zusammen mit mindestens einer weiteren Komponente, die in weiteren Schritten der Katalysatorbehandlung entweder ein inaktives Bindermaterial oder eine intermediäre, katalytisch aktive Mischverbindung formt, aus in Wasser löslichen Salzen in wässrigem Medium mittels Laugen hergestellt. Als Beispiele für derartige weitere Komponenten seien Al, Mg, Si, Zr, Ti, usw. bzw. dem Fachmann bekannte gängige Mischmetalloxid-bildende Elemente genannt. Die Fällung wird insbesondere durch Zugabe basischer Lösungen, insbesondere von Alkalilauge, Erdalkalilauge oder Ammoniak-basierten Laugen (z.B. Ammoniumhydroxid oder einfachen Aminen) zur Metallsalzlösung (oder vice versa) bewirkt. Der Gehalt der weiteren Komponenten kann bis zu 80 Gew.-% bezogen auf die gesamte Katalysatormasse betragen. Bevorzugt besitzen die Katalysatoren einen Anteil an weiteren Komponenten von 5 - 75 Gew.-%.

Der in Form eines Feststoffs anfallende Katalysatorvorläufer kann nach dem Fachmann grundsätzlich bekannten Methoden wie Filtrieren, Zentrifugieren, Eindampfen und Einengen von der Mutterlauge getrennt werden. Bevorzugt sind die Zentrifugation und die Filtration. Der erhaltene Feststoff kann weiter gewaschen oder direkt, wie erhalten, weiter eingesetzt werden. Für eine verbesserte Handhabbarkeit des erhaltenen Feststoffes kann dieser getrocknet werden. Wie bei heterogenen Katalysatoren bekannt, kann eine weitere Konditionierung von Vorteil sein. Der Konditionierung vor- oder nachgeschaltet kann zudem eine Formgebung und/oder Klassierung sein.

Der nach dem neuen Verfahren besonders bevorzugt einzusetzende Katalysator enthält 45-55 mol.-% Mn und 55-45 mol.-% Co bezogen auf den Gehalt katalytisch aktiver Komponenten als Elemente.

Die Hochtemperaturkalzinierung des Katalysators lässt sich beispielsweise kontinuierlich oder diskontinuierlich durchführen, wobei sich kontinuierlich oder diskontinuierlich sowohl auf die Zufuhr des getrockneten Katalysatorvorläufers als auch die Abfuhr des Katalysators beziehen kann.

Die Hochtemperaturkalzinierung des Katalysators lässt sich in verschiedenen Typen von Reaktoren durchführen. Beispielhaft ohne damit eine Einschränkung zu machen, seien hier Wirbelschichtreaktoren, Drehrohrreaktoren oder Reaktoren mit bewegtem Bett genannt.

Die Hochtemperaturkalzinierung des Katalysators kann auch gekoppelt mit der eigentlichen CNT Herstellung, schrittweise im gleichen Reaktor durchgeführt werden. Dabei wird in einem ersten Schritt zunächst der Katalysatorvorläufer in einem oxidativen oder inerten Gasstrom bei der entsprechenden Temperatur behandelt, und dann in einem zweiten Schritt nach entsprechenden Gasaustausch der so behandelte Katalysator im gleichen Reaktor bei für die Bildung von CNT Agglomeraten geeigneten Bedingungen genutzt.

Die neuen Kohlenstoffnanoröhrchen-Agglomerate finden in einer Reihe von unterschiedlichen Anwendungen eine nützliche Verwendung. Gegenstand der Erfindung ist folglich die Verwendung der neuen Kohlenstoffnanoröhrchen-Agglomerate als Zusatz für Polymere, Kautschuk, Keramik, Metalle, Metalllegierungen, Gläser, textile Fasern und Verbundwerkstoffe.

Ferner sind Mischungen oder Komposite Gegenstand der Erfindung die Kohlenstoffnanoröhrchen enthalten und die durch Zusatz von neuen zuvor beschriebenen Kohlenstoffnanoröhrchen-Agglomeraten zu Polymeren, Kautschuk, Keramik, Metallen, Metalllegierungen, Gläsern, textilen Fasern hergestellt sind.

Weiterer Gegenstand der Erfindung ist die Verwendung der neuen Kohlenstoffnanoröhrchen-Agglomerate als elektrisch leitfähiger Zusatz in Elektroden, in Membranen zur Stofftrennung, Solarzellen, Aktuatoren, Sensoren, Tinten oder Pasten sowie in Energiespeichern, insbesondere in Batterien, Akkumulatoren, Brennstoffzellen oder Kondensatoren.

Anderer Gegenstand der Erfindung ist die Verwendung der neuen Kohlenstoffnanoröhrchen-Agglomerate als Substrat für pharmazeutische Wirkstoffe oder für Pflanzenschutzwirkstoffe.

Weiterer Gegenstand der Erfindung ist die Verwendung der neuen Kohlenstoffnanoröhrchen-Agglomerate als Adsorber, insbesondere für flüchtige Verbindungen, z. B. für Gase oder biologische Verbindungen, insbesondere für Enzyme.

Gegenstand der Erfindung ist auch die Verwendung der neuen Kohlenstoffnanoröhrchen-Agglomerate als Träger oder Container von Katalysatoren.

Die Erfindung wird nachstehend anhand der Ausführungsbeispiele beispielhaft näher erläutert.

### Beispiele

### Beispiel 1: (Herstellung Katalysator 1; Kalzinierung bei 400 °C, Vergleichsbeispiel)

Eine Lösung von 306 g Mg(NO₃)₂*6H₂O in Wasser (0,35 Liter) wurde mit einer Lösung von 360 g Al(NO₃)₃*9H₂O in 0,351 Wasser vermischt. Anschließend wurden 170 g Mn(NO₃)₂*4H₂O und 194 g Co(NO₃)₂*6H₂O, jeweils gelöst in 0,51 Wasser hinzugegeben und die gesamte Mischung unter 30 min Rühren mittels Zugabe von Salpetersäure auf einen pH-Wert von ca. 2 gebracht. Ein Strom dieser Lösung wurde in einem Mischer mit 20,6 Gew.-%iger Natronlauge vermischt und die entstehende Suspension in eine Vorlage von 51 Wasser gegeben. Der pH-Wert der Vorlage wurde durch Steuerung der Natronlaugezugabe auf ca. 10 gehalten.

Der ausgefallene Feststoff wurde von der Suspension abgetrennt und mehrfach gewaschen.

Der gewaschene Feststoff wurde dann innerhalb von 16h in einem Schaufeltrockner getrocknet, wobei die Temperatur des Trockners innerhalb der ersten acht Stunden von Raumtemperatur auf 160 °C erhöht wurde. Anschließend wurde der Feststoff über 12 Stunden bei 500 °C Ofentemperatur (Endtemperatur gemessen in der Probe 400°C) in Gegenwart von Luft kalziniert und dann über 24 Stunden abgekühlt. Das Katalysatormaterial wurde dann noch 7 Tage lang zur Nachoxidation bei Raumtemperatur stehen gelassen. Es wurden insgesamt 121,3 g Katalysatormaterial isoliert.

### Beispiel 2: (Herstellung Katalysator 2; Kalzinierung bei 600 °C, 3 h, Vergleichsbeispiel)

Analog zu Beispiel 1 wurde Katalysatormaterial hergestellt, das jedoch zusätzlich bei 600°C für 3 h im Muffelofen in Gegenwart von Luft kalziniert wurde. Danach wurde der Feststoff abgekühlt und gewogen. Es wurden 110 g isoliert.

### Beispiel 3: (Herstellung Katalysator 3; Kalzinierung bei 600 °C, 6 h, Vergleichsbeispiel)

Analog zu Beispiel 1 wurde Katalysatormaterial hergestellt, das jedoch zusätzlich bei 600°C für 6 h im Muffelofen in Gegenwart von Luft kalziniert wurde. Danach wurde der Feststoff abgekühlt und gewogen. Es wurden 109 g isoliert.

### Beispiel 4: (Herstellung Katalysator 4; Kalzinierung bei 1000 °C, 3 h; erfindungsgemäß)

Analog zu Beispiel 1 wurde Katalysatormaterial hergestellt, das jedoch zusätzlich bei 1000°C für 3 h im Muffelofen in Gegenwart von Luft kalziniert wurde. Danach wurde der Feststoff abgekühlt und gewogen. Es wurden 109 g isoliert.

### Beispiel 5: (Herstellung der CNT 1 in einer Wirbelschicht, Vergleichsbeispiel)

Der in Beispiel 1 hergestellte Katalysator wurde in einer Wirbelschichtapparatur im Labormaßstab getestet. Der Katalysator 1 wird in einem von außen durch einen Wärmeträger beheizten Stahlreaktor mit einem inneren Durchmesser von 100 mm vorgelegt. Die Temperatur des Wirbelbettes wurde über eine PID-Regelung des elektrisch beheizten Wärmeträgers geregelt. Die Temperatur des Wirbelbettes wurde durch ein Thermoelement bestimmt. Eduktgase und inerte Verdünnungsgase wurden über elektronisch gesteuerte Massendurchflussregler in den Reaktor geleitet.

Der Reaktor wurde zunächst mit Stickstoff inertisiert und auf eine Temperatur von 700°C aufgeheizt. Dann wurde eine Menge von 18,0 g Katalysator 1 hergestellt gemäß Beispiel 1 eindosiert.

Danach wurde unmittelbar das Eduktgas als Mischung von Ethen und Stickstoff zugeschaltet. Das Volumenverhältnis der Eduktgasmischung betrug Ethen:N₂ = 90:10. Der Gesamtvolumenstrom wurde auf 40 NL·min⁻¹ (Normliter pro min) eingestellt. Die Beaufschlagung des Katalysators mit den Eduktgasen erfolgte für einen Zeitraum von 31 Minuten. Die Reaktion springt in weniger als 2 min an (untere Meßgrenze, technisch bedingt) und zeigt eine hohe Aktivität des Katalysators (on-line Messung des Wasserstoffgehaltes mit Gaschromatograph). Danach wurde die laufende Reaktion durch Unterbrechung der Eduktzufuhr abgestoppt und der Reaktorinhalt entnommen.

Die Menge an abgeschiedenem Kohlenstoff wurde durch Auswiegen bestimmt und die Struktur und Morphologie des abgeschiedenen Kohlenstoffs wurde mit Hilfe von REM- und TEM-Analysen ermittelt. Die Menge an abgeschiedenem Kohlenstoff im Bezug auf eingesetzten Katalysator, im weiteren als Ertrag bezeichnet, wurde auf Basis der Masse an Katalysator nach Kalzinierung (mkat,0) und dem Gewichtszuwachs nach Reaktion (mgesamt-mkat,0) definiert: Ertrag = (mgesamt-mKat,0)/mKat,0.

Der Versuch wurde 5 mal hintereinander durchgeführt. Die erhaltenen Produkte wurden zu einer Probe zusammengeführt und analysiert. Katalysatorausbeute betrug 44,7 g Kohlenstoffnanoröhrchenpulver pro g eingesetztem Katalysator. Die Schüttdichte des Produktes betrug 146,0 g/ L. Die Kohlenstofffasern hatten einen mittleren Durchmesser von 10,5 nm . Das Länge zu Durchmesser - Verhältnis der CNT betrug mindestens 100. Die Agglomerate hatten überwiegend (>95 Gew.-%) einen Durchmesser von 0.1 bis 1 mm.

REM Aufnahmen des erhaltenen Agglomerats ergaben eine Vogelnest (BN) Struktur als Agglomeratmorphologie.

### Beispiel 6: (Herstellung der CNT 2, Vergleichsbeispiel)

Der in Beispiel 2 hergestellte Katalysator wurde in einer Wirbelschichtapparatur im Labormaßstab getestet. Der Versuch wurde dazu analog Beispiel 5 mit dem Katalysator aus Beispiel 2 durchgeführt. Der Reaktor wurde zunächst mit Stickstoff inertisiert und auf eine Temperatur von 700°C aufgeheizt. Dann wurde eine Menge von 18,0 g Katalysator 2 hergestellt gemäß Beispiel 2 eindosiert.

Danach wurde unmittelbar das Eduktgas als Mischung von Ethen und Stickstoff zugeschaltet. Das Volumenverhältnis der Eduktgasmischung betrug Ethen:N₂ = 90:10. Der Gesamtvolumenstrom wurde auf 40 LN·min⁻¹ eingestellt. Die Beaufschlagung des Katalysators mit den Eduktgasen erfolgte für einen Zeitraum von 31 Minuten. Die Reaktion springt in weniger als 2 min an (untere Meßgrenze, technisch bedingt) und zeigt eine hohe Aktivität des Katalysators (on-line Messung des Wasserstoffgehaltes mit Gaschromatograph). Danach wurde die laufende Reaktion durch Unterbrechung der Eduktzufuhr abgestoppt und der Reaktorinhalt entnommen.

Der Versuch wurde 5 mal hintereinander durchgeführt. Die erhaltenen Produkte wurden zu einer Probe zusammengeführt und analysiert. Katalysatorausbeute betrug 53,0 g Kohlenstoffnanoröhrchenpulver pro g eingesetztem Katalysator. Die Schüttdichte des Produktes betrug 152,4 g/ L. Die Kohlenstofffasern hatten einen mittleren Durchmesser von 12,0 nm . Das Länge zu Durchmesser - Verhältnis der CNT betrug mindestens 100. Die Agglomerate hatten überwiegend (>95 Gew.-%) einen Durchmesser im Bereich von 0.1 bis 1 mm.

REM Aufnahmen des erhaltenen Agglomerats ergaben eine Vogelnest (BN) Struktur als Agglomeratmorphologie.

### Beispiel 7: (Herstellung der CNT 3, Vergleichsbeispiel)

Der in Beispiel 3 hergestellte Katalysator wurde in einer Wirbelschichtapparatur im Labormaßstab getestet. Der Versuch wurde dazu analog Beispiel 5 mit dem Katalysator aus Beispiel 3 durchgeführt. Der Reaktor wurde zunächst mit Stickstoff inertisiert und auf eine Temperatur von 700°C aufgeheizt. Dann wurde eine Menge von 18,0 g Katalysator 3 hergestellt gemäß Beispiel 3 eindosiert.

Danach wurde unmittelbar das Eduktgas als Mischung von Ethen und Stickstoff zugeschaltet. Das Volumenverhältnis der Eduktgasmischung betrug Ethen:N₂ = 90:10. Der Gesamtvolumenstrom wurde auf 40 LN·min⁻¹ eingestellt. Die Beaufschlagung des Katalysators mit den Eduktgasen erfolgte für einen Zeitraum von 31 Minuten. Die Reaktion springt in weniger als 2 min an (untere Meßgrenze, technisch bedingt) und zeigt eine hohe Aktivität des Katalysators (on-line Messung des Wasserstoffgehaltes mit Gaschromatograph). Danach wurde die laufende Reaktion durch Unterbrechung der Eduktzufuhr abgestoppt und der Reaktorinhalt entnommen.

Der Versuch wurde 5 mal hintereinander durchgeführt. Die erhaltenen Produkte wurden zu einer Probe zusammengeführt und analysiert. Katalysatorausbeute betrug 53,6 g Kohlenstoffnanoröhrchenpulver pro g eingesetztem Katalysator. Die Schüttdichte des Produktes betrug 150,8 g/ L. Die Kohlenstofffasern hatten einen mittleren Durchmesser von 12,7 nm . Das Länge zu Durchmesser - Verhältnis der CNT betrug mindestens 100. Die Agglomerate hatten überwiegend (>95 Gew.-%) einen Durchmesser im Bereich von 0.1 bis 1 mm.

REM Aufnahmen des erhaltenen Agglomerats ergaben eine Vogelnest (BN) Struktur als Agglomeratmorphologie.

### Beispiel 8: (Herstellung der CNT 4; erfindungsgemäß)

Der in Beispiel 4 hergestellte Katalysator wurde in einer Wirbelschichtapparatur im Labormaßstab getestet. Der Versuch wurde dazu analog Beispiel 5 mit dem Katalysator aus Beispiel 4 durchgeführt. Der Reaktor wurde zunächst mit Stickstoff inertisiert und auf eine Temperatur von 700°C aufgeheizt. Dann wurde eine Menge von 18,0 g Katalysator 4 hergestellt gemäß Beispiel 4 eindosiert.

Danach wurde unmittelbar das Eduktgas als Mischung von Ethen und Stickstoff zugeschaltet. Das Volumenverhältnis der Eduktgasmischung betrug Ethen:N₂ = 90:10. Der Gesamtvolumenstrom wurde auf 40 LN·min⁻¹ eingestellt. Die Beaufschlagung des Katalysators mit den Eduktgasen erfolgte für einen Zeitraum von 31 Minuten. Die Reaktion springt erst nach etwa 7 min an. Dies ist signifikant später als bei den Versuchen aus Beispiel 5 bis 7. Die Aktivität des Katalysators (on-line Messung des Wasserstoffgehaltes mit Gaschromatograph) ist ebenfalls erheblich geringer als in Beispiel 5 (etwa 70%). Die laufende Reaktion wurde durch Unterbrechung der Eduktzufuhr abgestoppt und der Reaktorinhalt entnommen.

Der Versuch wurde 5 mal hintereinander durchgeführt. Die erhaltenen Produkte wurden zu einer Probe zusammengeführt und analysiert. Katalysatorausbeute betrug 24,3 g Kohlenstoffnanoröhrchenpulver pro g eingesetztem Katalysator. Die Schüttdichte des Produktes betrug 141,3 g/ L. Die Kohlenstofffasern hatten einen mittleren Durchmesser von 9,7 nm . Das Länge zu Durchmesser - Verhältnis der CNT betrug mindestens 100. Die Agglomerate hatten überwiegend (>95 Gew.-%) einen Durchmesser im Bereich von 0.1 bis 1 mm.

REM Aufnahmen des erhaltenen Agglomerats ergaben, dass das Agglomerat aus vielen bauschförmigen CNT-Garnen bestand, innerhalb derer die einzelnen CNT lose miteinander verwoben und im wesentlichen nicht gerade zueinander oder parallel ausgerichtet sind (siehe Figuren 1 und 2).

### Beispiel 9: (Einarbeitung der CNT 1 in PC, Vergleichsbeispiel)

Aufgrund der hohen Oberfläche der Kohlenstoffnanoröhrchen ist eine Vereinzelung nur in Kombination mit einer Stabilisierung (Immobilisierung in einer Matrix, Zugabe von als Stabilisator wirkenden Stoffen) des Vereinzelungszustandes sinnvoll, da anderenfalls durch die hohen van der Waals Kräfte bzw. thermische Bewegungen der vereinzelten Carbon Nanotubes eine schnelle Reagglomeration der Kohlenstoffnanoröhrchen auftritt.

Das in Beispiel 5 erzeugte Kohlenstoffnanoröhrchenpulver CNT 1 wurde zusammen mit Polycarbonat (Makrolon 2805) in den Haupteinzug eines ko-rotierenden Doppelschneckenextruder (ZSK 26Mc, L/D 36) eingeführt. Die Temperatur des Extruders betrug 280°C. Der Durchsatz wurde auf 26kg/ h Komposit und die Drehzahl auf 400 rpm eingestellt. Das Massenverhältnis des Kohlenstoffnanoröhrchenpulvers zu Polycarbonat betrug 3 : 97. Der aus dem Extruder austretende Strang wurde abgekühlt im Wasserbad und anschließend granuliert. Eine TEM Aufnahme eines von dem Komposit angefertigten Schnittes zeigte, dass die Kohlenstoffnanoröhrchen teilweise noch agglomeriert im Polycarbonat vorlagen. Der Komposit wurde anschließend auf einer Spritzgußmaschine Arburg 370 S 800 - 150 zu Rundplatten mit einem Durchmesser von 80 mm und einer Dicke von 2 mm spritzgegossen. Der Anguß befand sich seitlich. Die Spritzgußbedingungen waren Werkzeugtemperatur 90 °C, Massetemperatur 340 °C und Vorschub 10 mm/s. Anschließend wurde der Oberflächenwiderstand mit einer Ringelektrode (Monroe Model 272, 100 V) gemessen. Die Probe zeigte einen Oberflächenwiderstand größer 10¹² Ohm. Außerdem wurde der Polymerabbau mittels GPC bestimmt. Das PC zeigte ein Mw von 27.027 g/mol (vorher 28.000 g/mol).

### Beispiel 10: (Einarbeitung der CNT 4 in PC, erfindungsgemäß)

Das in Beispiel 8 erzeugte Kohlenstoffnanoröhrchenpulver CNT 4 wurde zusammen mit Polycarbonat (Makrolon 2805) in den Haupteinzug eines ko-rotierenden Doppelschneckenextruder (ZSK 26Mc, L/D 36, Schneckenbesatz identisch zu Beispiel 9) eingeführt. Die Temperatur des Extruders betrug 280°C. Der Durchsatz wurde auf 26kg/ h Komposit und die Drehzahl auf 400 rpm eingestellt. Das Massenverhältnis des Kohlenstoffnanoröhrchenpulvers zu Polycarbonat betrug 3 : 97. Der aus dem Extruder austretende Strang wurde abgekühlt im Wasserbad und anschließend granuliert. Eine TEM Aufnahme eines von dem Komposit angefertigten Schnittes zeigte, dass die Kohlenstoffnanoröhrchen hauptsächlich vereinzelt im Polycarbonat vorlagen. Der Komposit wurde anschließend auf einer Spritzgußmaschine Arburg 370 S 800 - 150 zu Rundplatten mit einem Durchmesser von 80 mm und einer Dicke von 2 mm spritzgegossen. Der Anguß befand sich seitlich. Die Spritzgußbedingungen waren Werkzeugtemperatur 90 °C, Massetemperatur 340 °C und Vorschub 10 mm/s. Anschließend wurde der Oberflächenwiderstand mit einer Ringelektrode (Monroe Model 272, 100 V) gemessen. Die Probe zeigte einen Oberflächenwiderstand 2·10⁸ Ohm. Außerdem wurde der Polymerabbau mittels GPC bestimmt. Das PC zeigte ein Mw von 27.543 g/mol (vorher 28.000 g/mol). Im Vergleich zu dem in Beispiel 9 (Vergleichsbeispiel) gezeigten Material ergibt sich ein deutlich geringerer Abbau des Molekulargewichts des Polymeren.

## Patentansprüche

1. Agglomerat aus Kohlenstoffnanoröhrchen, die einen Durchmesser von 3 bis 100 nm und ein Länge zu Durchmesser-Verhältnis von mindestens 5 aufweisen, **dadurch gekennzeichnet, dass** das Agglomerat Bündel von Kohlenstoffnanoröhrchen in Form von miteinander verschlungenen gebauschten Garnen aus Kohlenstoffnanoröhrchen aufweist, wobei die Kohlenstoffnahoröhrchen in dem gebauschten Garnbündel einen mittleren Abstand voneinander im Bereich von 20 bis 100 nm, bevorzugt 30 bis 80 nm, besonders bevorzugt 40 bis 60 nm haben.

2. Agglomerat gemäß Anspruch 1, **dadurch gekennzeichnet, dass** mindestens 95 Gew.-% der Agglomeratteilchen einen Außendurchmesser im Bereich von 20 µm bis 6000 µm, bevorzugt 60 µm bis 4000 µm, besonders bevorzugt 100 µm bis 1500 µm haben.

3. Agglomerat gemäß Anspruch 1 oder 2, **dadurch gekennzeichnet, dass** dieses eine Schüttdichte gemäß EN ISO 60 von 20 bis 250 kg/m³, bevorzugt 40 bis 200 kg/m³, besonders bevorzugt 50 bis 150 kg/m³ aufweist.

4. Agglomerat gemäß einem der Ansprüche 1 bis 3, **dadurch gekennzeichnet, dass** die Kohlenstoffnanoröhrchen in dem gebauschten Garn ineinander verschlungen vorliegen und im wesentlichen nicht parallel zueinander ausgerichtet sind.

5. Agglomerat gemäß einem der Ansprüche 1 bis 4, **dadurch gekennzeichnet, dass** die gebauschten Garne aus Kohlenstoffnanoröhrchen einen Durchmesser von 0,1 µm bis 20 µm, bevorzugt von 0,14 µm bis 10 µm und besonders bevorzugt von 0,18 µm bis 3 µm haben.

6. Agglomerat gemäß einem der Ansprüche 1 bis 5, **dadurch gekennzeichnet, dass** die Kohlenstoffnanoröhrchen einen Gehalt an Verunreinigungen, insbesondere von Metallen oder Metallverbindungen, insbesondere bevorzugt von Metalloxiden, von höchstens 7 Gew.-%, bevorzugt höchstens 5 Gew.-%, aufweisen.

7. Agglomerat gemäß einem der Ansprüche 1 bis 6, **dadurch gekennzeichnet, dass** die Kohlenstoffnanoröhrchen in Form von mehrwandigen Kohlenstoffnanoröhrchen vorliegen, insbesondere solchen, die ineinander verschachtelte Graphitröhren aufweisen, oder auf aufgerollten, mehrlagigen Graphenschichten basieren.

8. Mischungen oder Komposite, enthaltend Kohlenstoffnanoröhrchen, hergestellt durch Zusatz von Agglomeraten gemäß einem Ansprüche 1 bis 7 zu Polymeren, Kautschuk, Keramik, Metallen, Metalllegierungen, Gläsern, textilen Fasern.

9. Verwendung der Kohlenstoffnanoröhrchenagglomerate gemäß einem Ansprüche 1 bis 7 als Zusatz für Polymere, Kautschuk, Keramik, Metalle, Metalllegierungen, Gläser, textile Fasern und Verbundwerkstoffe.

10. Verwendung der Kohlenstoffnanoröhrchenagglomerate gemäß einem Ansprüche 1 bis 7 als elektrisch leitfähiger Zusatz in Elektroden, in Membranen zur Stofftrennung, Solarzellen, Aktuatoren, Sensoren, Tinten oder Pasten sowie in Energiespeichern, insbesondere in Batterien, Akkumulatoren, Brennstoffzellen oder Kondensatoren.

11. Verwendung der Kohlenstoffnanoröhrchenagglomerate gemäß einem der Ansprüche 1 bis 7 als Substrat für pharmazeutische Wirkstoffe oder für Pflanzenschutzwirkstoffe.

12. Verwendung der Kohlenstoffnanoröhrchenagglomerate gemäß einem der Ansprüche 1 bis 7als Adsorber, insbesondere für flüchtige Verbindungen, z. B. für Gase oder biologische Verbindungen, insbesondere für Enzyme.

13. Verwendung der Kohlenstoffnanoröhrchenagglomerate gemäß einem der Ansprüche 1 bis 7als Träger oder Container von Katalysatoren.

## Claims

1. Agglomerate of carbon nanotubes which have a diameter of 3 to 100 nm and have a length to diameter ratio of at least 5, **characterized in that** the agglomerate comprises aggregates of carbon nanotubes in the form of entangled bulked yarns of carbon nanotubes, the carbon nanotubes in the bulked yarn aggregate having a mean distance from one another in the range from 20 to 100 nm, preferably 30 to 80 nm, more preferably 40 to 60 nm.

2. Agglomerate according to Claim 1, **characterized in that** at least 95% by weight of the agglomerate particles have an external diameter in the range from 20 µm to 6000 µm, preferably 60 µm to 4000 µm, more preferably 100 µm to 1500 µm.

3. Agglomerate according to Claim 1 or 2, **characterized in that** it has a bulk density to EN ISO 60 of 20 to 250 kg/m³, preferably 40 to 200 kg/m³, more preferably 50 to 150 kg/m³.

4. Agglomerate according to any of Claims 1 to 3, **characterized in that** the carbon nanotubes in the bulked yarn are in entangled form and are essentially not aligned straight with respect to one another.

5. Agglomerate according to any of Claims 1 to 4, **characterized in that** the bulked yarns of carbon nanotubes have a diameter of 0.1 µm to 20 µm, preferably of 0.14 µm to 10 µm and more preferably of 0.18 µm to 3 µm.

6. Agglomerate according to any of Claims 1 to 5, **characterized in that** the carbon nanotubes have a content of impurities, especially of metals or metal compounds, especially preferably of metal oxides, of at most 7% by weight, preferably at most 5% by weight.

7. Agglomerate according to any of Claims 1 to 6, **characterized in that** the carbon nanotubes are in the form of multiwall carbon nanotubes, especially those which have graphite tubes nested one inside another, or are based on rolled-up, multi-ply graphene layers.

8. Mixtures or composites comprising carbon nanotubes, prepared by adding agglomerates according to any of Claims 1 to 7 to polymers, rubber, ceramic, metals, metal alloys, glasses, textile fibres.

9. Use of the carbon nanotube agglomerates according to any of Claims 1 to 7 as an additive for polymers, rubber, ceramic, metals, metal alloys, glasses, textile fibres and composite materials.

10. Use of the carbon nanotube agglomerates according to any of Claims 1 to 7 as an electrically conductive additive in electrodes, in membranes for substance separation, solar cells, actuators, sensors, inks or pastes, and in energy stores, especially in batteries, accumulators, fuel cells or capacitors.

11. Use of the carbon nanotube agglomerates according to any of Claims 1 to 7 as a substrate for active pharmaceutical ingredients or for active crop protection ingredients.

12. Use of the carbon nanotube agglomerates according to any of Claims 1 to 7 as adsorbents, especially for volatile compounds, for example for gases or biological compounds, especially for enzymes.

13. Use of the carbon nanotube agglomerates according to any of Claims 1 to 7 as supports or containers of catalysts.

## Revendications

1. Agglomérat de nanotubes de carbone, qui présentent un diamètre de 3 à 100 nm et un rapport de longueur à diamètre d'au moins 5, **caractérisé en ce que** l'agglomérat présente des faisceaux de nanotubes de carbone sous forme de fils gonflés, enchevêtrés les uns avec les autres de nanotubes de carbone, les nanotubes de carbone dans le faisceau de fils gonflés présentant une distance moyenne les uns des autres dans la plage de 20 à 100 nm, de préférence de 30 à 80 nm, de manière particulièrement préférée de 40 à 60 nm.

2. Agglomérat selon la revendication 1, **caractérisé en ce qu'**au moins 95% en poids des particules d'agglomérat présentent un diamètre externe dans la plage de 20 µm à 6000 µm, de préférence de 60 µm à 4000 µm, de manière particulièrement préférée de 100 µm à 1500 µm.

3. Agglomérat selon la revendication 1 ou 2, **caractérisé en ce qu'**il présente une densité apparente selon la norme EN ISO 60 de 20 à 250 kg/m³, de préférence de 40 à 200 kg/m³, de manière particulièrement préférée de 50 à 150 kg/m³.

4. Agglomérat selon l'une quelconque des revendications 1 à 3, **caractérisé en ce que** les nanotubes de carbone dans le fil gonflé se trouvent sous forme enchevêtrée les uns dans les autres et sont orientés de manière essentiellement non parallèle les uns par rapport aux autres.

5. Agglomérat selon l'une quelconque des revendications 1 à 4, **caractérisé en ce que** les fils gonflés de nanotubes de carbone présentent un diamètre de 0,1 µm à 20 µm, de préférence de 0,14 µm à 10 µm et de manière particulièrement préférée de 0,18 µm à 3 µm.

6. Agglomérat selon l'une quelconque des revendications 1 à 5, **caractérisé en ce que** les nanotubes de carbone présentent une teneur en impuretés, en particulier de métaux ou de composés métalliques, en particulier de préférence d'oxydes métalliques, d'au plus 7% en poids, de préférence d'au plus 5% en poids.

7. Agglomérat selon l'une quelconque des revendications 1 à 6, **caractérisé en ce que** les nanotubes de carbone se trouvent sous forme de nanotubes de carbone à plusieurs parois, en particulier de nanotubes qui présentent des tubes de graphite imbriqués les uns dans les autres, ou sont à base de couches multicouches enroulées de graphène.

8. Mélanges ou composites, contenant des nanotubes de carbone, préparés par addition d'agglomérats selon l'une quelconque des revendications 1 à 7 à des polymères, du caoutchouc, de la céramique, des métaux, des alliages métalliques, des verres, des fibres textiles.

9. Utilisation des agglomérats de nanotubes de carbone selon l'une quelconque des revendications 1 à 7 comme additif pour des polymères, du caoutchouc, de la céramique, les métaux, des alliages métalliques, des verres, des fibres textiles et des matériaux composites.

10. Utilisation des agglomérats de nanotubes de carbone selon l'une quelconque des revendications 1 à 7 comme additif électriquement conducteur dans des électrodes, des membranes pour la séparation de substances, des piles solaires, des actionneurs, des capteurs, des encres ou des pâtes ainsi que dans des accumulateurs d'énergie, en particulier dans des batteries, des accumulateurs, des piles à combustible ou des condensateurs.

11. Utilisation des agglomérats de nanotubes de carbone selon l'une quelconque des revendications 1 à 7 comme substrat pour des substances actives pharmaceutiques ou des substances actives de phytoprotection.

12. Utilisation des agglomérats de nanotubes de carbone selon l'une quelconque des revendications 1 à 7 comme absorbant, en particulier pour des composés volatils, par exemple pour des gaz ou des composés biologiques, en particulier pour des enzymes.

13. Utilisation des agglomérats de nanotubes de carbone selon l'une quelconque des revendications 1 à 7 comme support ou contenant de catalyseurs.
